(19) Europäisches Patentamt / European Patent Office / Office européen des brevets

(11) **EP 4 431 733 A1**

(12) **EUROPEAN PATENT APPLICATION**

(43) Date of publication:
**18.09.2024 Bulletin 2024/38**

(21) Application number: **23161382.9**

(22) Date of filing: **13.03.2023**

(51) International Patent Classification (IPC):
**F03D 17/00** (2016.01)

(52) Cooperative Patent Classification (CPC):
**F03D 17/001; F03D 17/022; F03D 17/028;**
F05B 2260/80; F05B 2270/327; F05B 2270/802;
F05B 2270/805

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(71) Applicant: **Siemens Gamesa Renewable Energy**
**A/S**
**7330 Brande (DK)**

(72) Inventor: **The designation of the inventor has not**
**yet been filed**

(74) Representative: **SGRE-Association**
**Siemens Energy Global GmbH & Co. KG**
**SE I IM P Intellectual Property**
**Siemenspromenade 9**
**91058 Erlangen (DE)**

(54) **WIND TURBINE COMPRISING A LEAKY FEEDER BASED INVERSE SYNTHETIC APERTURE RADAR, AND METHOD**

(57) There is described a wind turbine (1) comprising:
i) a tower (2);
ii) a nacelle (3), coupled to the tower (1);
iii) a wind rotor (5), which is arranged at the nacelle (3), and which comprises at least one blade (4); and
iv) a blade inspection device (100), comprising:
a) a transmitting leaky feeder (110), coupled to a transmitter (111), and configured to transmit an electromagnetic signal;

b) a receiving leaky feeder (120), coupled to at least one receiver (121, 122), and configured to receive a reflection of the electromagnetic signal; and
c) a processing device (140), configured to obtain an information with respect to the blade (4) based on the received electromagnetic signal.

Hereby, the blade inspection device (100) is configured as an inverse synthetic aperture radar, ISAR.

FIG 2

EP 4 431 733 A1

**Description**

Field of invention

The present invention relates to a wind turbine comprising a tower, a nacelle, a wind rotor, and at least one blade. The wind turbine further comprises a blade inspection device that applies a transmitting leaky feeder and a receiving leaky feeder. The invention also relates to a method of inspecting the blade(s) of the wind turbine. Further, the invention relates to a use of inverse synthetic aperture radar (ISAR) for the inspection of wind turbines. Thus, the present invention may relate to the technical field of wind turbines.

Art Background

Wind turbines can be considered as an important energy production source and it can be expected that their importance and distribution will grow more and more. Accordingly, there is constant research and development undertaken to further improve the functionality of wind turbines. An important aspect in this regard may be the inspection and monitoring of the wind turbine blades, in particular during operation.

To determine the blade conditions (blade health), there are different systems available. While some are working with internal sensors in the blade, other are using drones to check the blade from the outside or inspect the blade by service technicians via a rope.

Another inspection technique is Synthetic Aperture Radar (SAR), a commonly known principle to virtually increase the antenna size of a system and therefore allow to determine a more detailed radar image of a target. If a radar sensor is mounted on the wind turbine tower, it could also be used to form a synthetic aperture radar. Moving the target (the blade) instead of the antenna would be a so-called Inverse SAR (ISAR). Conventionally, multiple radar sensors are vertically mounted at the turbine tower and used to perform non-destructive radar testing, e.g. by ISAR.

However, the inspection can only be performed from one blade position in front of the radar sensors and is thus limited to specific yaw angles (nacelle positions).

Summary of the Invention

There may be a need to inspect a wind turbine blade (during operation) in an efficient and reliable manner.

This need may be met by the subject matter according to the independent claims. Advantageous embodiments of the present invention are described by the dependent claims.

According to a first aspect of the invention, there is described a wind turbine comprising: a tower; a nacelle, coupled to the tower; a wind rotor, which is arranged at the nacelle, and which comprises at least one blade (in particular at least three blades); and a blade inspection/monitoring functionality, comprising:

i) a transmitting leaky feeder, coupled to a transmitter (unit), and configured to transmit an electromagnetic signal (of the transmitter (unit)),
ii) a receiving leaky feeder, coupled to at least one receiver (unit)(in particular two receiver units), and configured to receive a reflection (in particular reflected from at least one blade) of the electromagnetic signal (and to provide said signal to the receiver unit), and
iii) a processing device, configured to (obtain an information with respect to the blade and/or) inspect the at least one blade based on the received (reflected) electromagnetic signal.

Hereby, the blade inspection device is configured as an inverse synthetic aperture radar (ISAR).

According to a second aspect of the invention, there is described a method of inspecting a blade of a wind turbine, the method comprising:

i) transmitting an electromagnetic signal by a transmitting leaky feeder;
ii) receiving a reflection of the electromagnetic signal by a receiving leaky feeder; and
iii) inspecting (a status of) the blade based on the received electromagnetic signal.

Hereby, the transmitting leaky feeder and the receiving leaky feeder function as an inverse synthetic aperture radar (ISAR).

According to a third aspect of the invention, there is described a use (method of using) of a transmitting leaky feeder and a receiving leaky feeder for a wind turbine inspection by inverse synthetic aperture radar (ISAR).

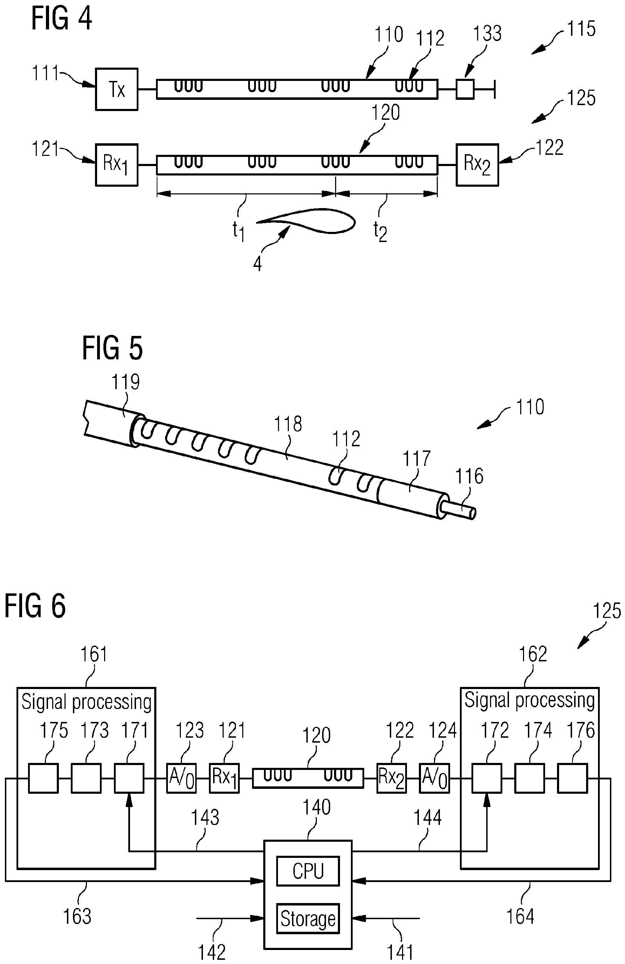

In the context of the present document, the term "leaky feeder" may in particular refer to an elongated structure that is configured as a transmitter and/or receiver of electromagnetic waves/signals, wherein the transmission/reception occurs at specifically defined slots/apertures (leaking). An exemplary embodiment of a leaky feeder is shown in Figure 5. The leaky feeder may be configured e.g. as a leaky coaxial cable, a leaky waveguide (in particular suitable at high frequencies), or a leaky stripline.

In an embodiment, the leaky feeder comprises a plurality of slots to allow an electromagnetic signal to leak out of the leaky feeder along its (entire or parts of) length. In a further embodiment, the leaky feeder comprises a plurality of slots to allow an electromagnetic signal to leak into the leaky feeder along its (entire) length. In the present document, the term "slot" may also include slot groups. In an embodiment, the slots/slot groups may be, regularly or irregularly distributed along the length of the leaky feeder.

In an embodiment, the leaky feeder is coupled/connected to at least one of a transmitter (unit), a receiver (unit), a termination (unit), see e.g. the example of Figure 4. Hereby, the leaky feeder may be configured to transmit the signal provided by the transmitter (unit) and/or to provide a received signal to the receiver (unit).

In an example, the transmitting leaky feeder and the receiving leaky feeder are separate elements. In another example, the transmitting leaky feeder and the receiving leaky feeder are implemented in the same element (transceiver leaky feeder).

In the context of the present document, the term "elongated conductor" may in particular refer to a conductor with a main extension in one spatial dimension, which is much larger than the extension in the other two spatial dimensions, for example a cable. The elongated conductor may serve as an electric connector between the leaky feeder and a communication-associated device, such as a transmitter, a receiver, or a termination. Hereby, the exact length of the elongated conductor may not be known and may have to be calibrated. A leaky feeder path may be defined as a (signal) path through the leaky feeder and the connected elongated conductor.

In the context of the present document, the term "synthetic aperture radar" may in particular refer to an established radar technique to create a high-resolution image with comparatively small physical antennas which are moved (e.g. using an aircraft) during transmission onto the target. Alternatively, using inverse SAR, the target is moved (e.g. a rotating blade), while the antennas are fixed. During transmission, (successive pulses of) electromagnetic waves may be transmitted to "illuminate" a target scene, and the echo of each wave/pulse is received and recorded. Using SAR, two- or three-dimensional images of the target may be obtained. Such a (high resolution) image may be used to inspect a blade during operation and to detect potential faulty on the one hand, and the blade dynamics on the other hand.

In the context of the present document, the term "processing device" may in particular refer to any hardware and/or software suitable to perform the above described step of inspecting/monitoring of the blade(s) based on the received electromagnetic signal. The processing device may be further configured to perform a calibration operation with respect to at least one leaky feeder. The processing device may comprise one or more processors. In an example, the processing device may be implemented as one or more processing units in the calibration device or the wind turbine, respectively. In another example, the processing device may be located (at least partially) outside of the wind turbine and operate remotely.

According to an exemplary embodiment, the invention may be based on the idea that a wind turbine blade may be inspected in an efficient and reliable manner, when a transmitting leaky feeder and a receiving leaky feeder (or a transceiver leaky feeder) are applied to perform an ISAR-based inspection of the blade.

A leaky feeder ("radiating cable") is a cable or waveguide that is "leaky" in that it comprises slots in an outer conductor layer, so that electromagnetic signals leak in and/or out through said slots along the entire length of the leaky feeder or parts of it. Accordingly, a leaky feeder can be especially interesting for applications, where signals should be transmitted/received along an extension, for example a tunnel, a mine, or a train. In this respect, a leaky feeder application may be especially useful, for example by monitoring the blade(s) using one or more leaky feeder as antenna(s) of a radar functionality.

By using a leaky feeder to implement the ISAR functionality, wind turbine blades may be efficiently evaluated during operation with respect to faults (such as cracks, dirt, or other issues related to the blade health), as well as the blade dynamic (e.g. twist, edgewise, flatwise, torsion, pitch and flexing/bending).

The described invention may hereby combine the benefits of non-destructive (radar) inspection with the advantages of a leaky feeder, in particular providing a radio functionality over a large extension such as 360° monitoring around the wind turbine tower. In comparison to conventional solutions, a more cost-efficient system may be provided, which, nevertheless, may be more versatile, flexible and reliable. The described set-up may be much simpler and easier to install in comparison to conventional solutions and can be combined/implemented in already existing (leaky feeder) systems in a straightforward manner.

Furthermore, based on the received (reflected) electromagnetic signal, a calibration operation may be performed, e.g. to determine accurately the phase angle and/or amplitude information of the set-up, so that efficient signal processing may be performed and high quality radar images may be obtained.

Exemplary Embodiments

According to an embodiment, the transmitting leaky feeder is configured to provide an antenna beam defined by an azimuth ($\alpha$) and an elevation ($\beta$) (and is connected to the main antenna lobe of the leaky feeder). This may provide the advantage that a large region is covered by the radar application and the moving blade can be investigated at a plurality of positions and time points. Using a leaky feeder, a large azimuth may be easily achievable by the extension of the leaky feeder and the distribution of the slots. In an example, alpha is 360 degrees around the tower. In a specific example, alpha may be limited in normal operation mode to approximately 120 degrees. In an exemplary example, beta is in the range 20 to 30 degrees.

According to a further embodiment, the receiving leaky feeder is configured to receive the reflections of said (transmitted) antenna beam. This may provide the advantage that the reflections (the echo) of the highly efficient beam may be reliable detected by exploiting the longitudinal extension of the receiving leaky feeder.

According to a further embodiment, the receiving leaky feeder is coupled at the one end to a first receiver (unit) and at the other end to a second receiver (unit). Thereby, the quality of the reception may be improved. By merging the radar image from the first receiver and the second receiver (on the same leaky feeder), it may be enabled to generate a higher resolution.

According to a further embodiment, the transmitting leaky feeder and/or the receiving leaky feeder is at least partially located in the tower circumferential direction, in particular (bent) inside or outside of the tower. This may provide the advantage that the leaky feeder(s) cover a region of up to 360° around the wind turbine tower. In this manner, the inspection may be (essentially) independent of the yaw angle (nacelle position). This may highly increase flexibility and reliability of the measurement.

According to a further embodiment, the transmitting leaky feeder and/or the receiving leaky feeder is (at the tower) arranged at the same vertical height (z) as a part of the blade (in particular the tip of the blade). This architecture may enable an especially efficient inspection of the moving blade.

According to a further embodiment, the wind turbine (in particular the processing device) is further configured to determine a blade-related parameter, in particular moving speed and/or location, more in particular based on measurement of a sensor device and/or a phase-locked loop device. This may provide the advantage that the dynamics of the blade may be measured, alternatively or additionally to wind turbine sensors.

The moving speed (trajectory) and position of the blade could be estimated by a sensor, e.g. an incremental sensor in the hub. Alternatively or additionally, the trajectory of the blade can be estimated by a phase lock loop (PLL) synchronized on the one P or three P frequency. These data may support/complement measurements of the ISAR or the other way around.

According to a further embodiment, the wind turbine (in particular the processing device) is further configured to determine a yaw-related parameter, in particular a position of the nacelle, more in particular based on a yaw sensor/inspection device. This may provide the advantage that the position of the nacelle can be directly taken into account, when performing the leaky feeder based ISAR measurement.

According to an exemplary embodiment, the yawing position of the nacelle could be determined/estimated by the leaky feeder system or by another sensor in the yawing region. With the information of the blade position, e.g. trajectory, it is possible to determine a phase correction together with the calibration data of the whole system.

In an exemplary embodiment, the ISAR is using a basic information of an incremental sensor or PLL, the yawing position, and the information of the blade position, for evaluating its trajectory.

In an exemplary embodiment, the runtime of the signal in the transmitting leaky feeder is known, the runtime of the received signal in the receiving leaky feeder is known, the distance blade-to-tower (blade to leaky feeder) is measured and/or known, the position of the blade on its rotation plane is known by a sensor (e.g. the incremental sensor in the hub or PLL), so that the system may be described in an unambiguous manner.

According to a further embodiment, the wind turbine (in particular the processing device) is further configured to perform a calibration operation with respect to the transmitting leaky feeder and/or the receiving leaky feeder, in particular with respect to an elongated conductor associated with the transmitting leaky feeder and/or the receiving leaky feeder. In this manner, the described methodology may not only be used to produce (high quality) radar images, but also to calibrate the set-up, in particular leaky feeder paths.

According to a further embodiment, the calibration operation comprises: derive a length information with respect to the elongated conductor. The length information may be determined with respect to the (lead-in) elongated conductor and/or the distance from the transmitter through the elongated conductor to the (first) slot of the leaky feeder with closest proximity to the elongated conductor.

This may provide the advantage that a versatile length information (potentially required for further calibrations) may be directly derivable. For example, the length of the elongated conductor may be determined or the length from a communication-associated device (via the elongated conductor) to the (first slot of the) leaky feeder.

In an example, the length from the communication-associated device (e.g. transmitter unit) to the first slot could be calculated by a time measurement of the incident and reflected electromagnetic pulse:

$$\texttt{length to slot = 0.5 * } \Delta \texttt{t * Vf * C0}$$

wherein $\Delta$t is the time difference between the incident and reflected wave/pulse. Vf is the velocity factor and a conductor specific value, for example 0.66 for an elongated conductor and 0.88 for a leaky feeder. Preferably, Vf values of the leaky feeder and the elongated conductor are equal. C0 is the speed of light.

According to a further embodiment, the calibration operation comprises at least one of frequency domain reflectometry, time domain reflectometry, beam steering. In this manner, an efficient and reliable calibration may be performed (also without using a radar functionality for calibration).

According to a further embodiment, the wind turbine (in particular the processing device) is further configured to determine a phase angle information and/or amplitude information with respect to the transmitting leaky feeder and/or the receiving leaky feeder, in particular based on the calibration operation. The phase angle information may be a valuable information for further calibration operations and applications of the leaky feeder (path).

In an example, the phase angle may be calculated as follows:

$$\texttt{n = length to slot/wavelength } \lambda$$

Hereby, n is an integer to be multiplied by 360°, for example in case n = 1.1, the phase angle would be 396°.

In an exemplary embodiment, with the information of the position of the blade in yawing plane (azimuth) and/or the rotational information generated by a sensor (e.g. an incremental sensor in the hub or a PLL) and/or the runtime of the signal in the leaky feeder (path), may be possible to determine the phase offset, which later on can to be corrected.

According to a further embodiment, the wind turbine (in particular the processing device) is further configured to perform a phase correction and/or amplitude correction with respect to the transmitting leaky feeder and/or the receiving leaky feeder based on the calibration operation.

According to an exemplary embodiment, the phase correction is advantageous due to the fact, that the movement of the blade may cause a phase error, which is depending on the trajectory of the blade. This would otherwise introduce smearing of the radar image. Additionally, there may be a phase error caused by the leaky feeder system itself. This system phase error could be eliminated by a calibration. Using a calibration operation, the whole system can be made coherent (known phase relationship).

According to a further embodiment, the wind turbine (in particular the processing device) is further configured to adapt the phase shift and/or the amplitude modulation of two or more leaky feeder transmitted electromagnetic signals, based on the calibration operation, to steer an electromagnetic signal beam. Using accurately adapted phase shift/amplitude, a beam steering may be enabled to provide a further highly efficient and reliable blade inspection.

According to a further embodiment, the positions of the transmitting leaky feeder and the receiving leaky feeder positions can be (ex-) changed. Thereby, the operation can be made more flexible, depending on the desired application.

According to a further embodiment, the transmitting and the receiving functionality are combined in one hardware and/or only one leaky feeder ("transceiver" leaky feeder".

According to an exemplary embodiment, with a dynamic "range Doppler-map" it may be possible to determine a coherent (known phase relations) system. The "range Doppler-map" can be extracted from the distance and/or speed measurements (trajectory) of the received signals.

According to an exemplary embodiment, a very detailed radar imaging may be enabled due to the fact that there is a repetition of the same blade(s) flying by in a predetermined pattern. Multiple radar images can be added (overlaid + averaged). So that a higher resolution image can be generated (accumulation over time, same blade is observed multiple times). This "oversampling" could be triggered or synchronized by a PLL or a sensor, to "capture" the same blade multiple times.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

Brief Description of the Drawings

Figure 1 shows a wind turbine with a blade inspection device in accordance with an exemplary embodiment of the present invention.

Figure 2 shows a front view of a wind turbine blade inspection using leaky feeder based ISAR in accordance with an exemplary embodiment of the present invention.

Figure 3 shows a top view of a wind turbine blade inspection using leaky feeder based ISAR in accordance with an exemplary embodiment of the present invention.

Figure 4 shows a blade inspection device comprising a transmitting leaky feeder and a receiving leaky feeder in accordance with an exemplary embodiment of the present invention.

Figure 5 shows a leaky feeder in accordance with an exemplary embodiment of the present invention.

Figure 6 shows a receiving leaky feeder path coupled to a processing device in accordance with an exemplary embodiment of the present invention.

Detailed Description of the Drawings

The illustration in the drawing is schematic. It is noted that in different figures, similar or identical elements or features are provided with the same reference signs or with reference signs, which are different from the corresponding reference signs only within the first digit. In order to avoid unnecessary repetitions elements or features which have already been elucidated with respect to a previously described embodiment are not elucidated again at a later position of the description.

Further, spatially relative terms, such as "front" and "back", "above" and "below", "left" and "right", et cetera are used to describe an element's relationship to another element(s) as illustrated in the figures. Thus, the spatially relative terms may apply to orientations in use which differ from the orientation depicted in the figures. Obviously all such spatially relative terms refer to the orientation shown in the figures only for ease of description and are not necessarily limiting as an apparatus according to an embodiment of the invention can assume orientations different than those illustrated in the figures when in use.

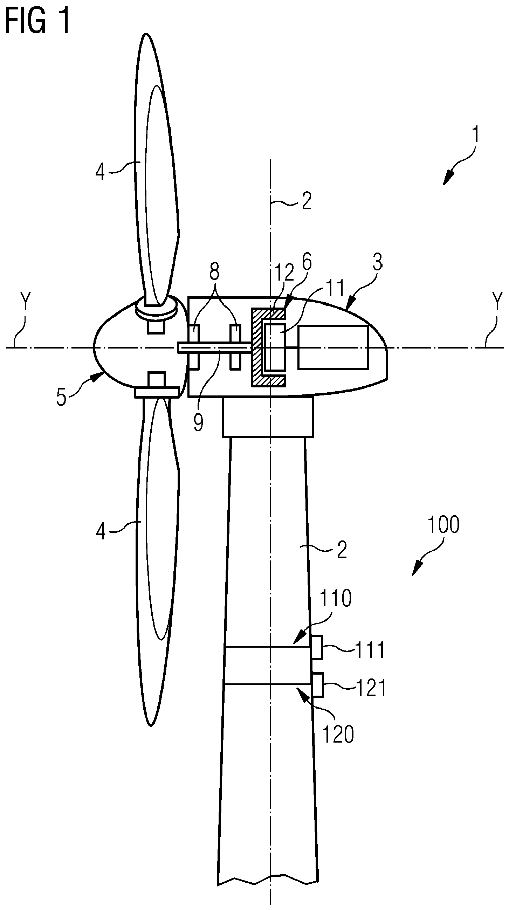

**Figure 1** shows a wind turbine 1 with a blade inspection device 100 in accordance with an exemplary embodiment of the present invention. The wind turbine 1 comprises a tower 2, which is mounted on a non-depicted fundament. A nacelle 3 is arranged on top of the tower 2. In between the tower 2 and the nacelle 3, a yaw angle adjustment device (not shown) is provided, which is capable of rotating the nacelle around a vertical yaw axis Z.

The wind turbine 1 further comprises a wind rotor 5 having one or more rotational blades 4 (in the perspective of Figure 1 only two blades 4 are visible). The wind rotor 5 is rotatable around a rotational axis Y. In general, when not differently specified, the terms axial, radial and circumferential in the following are made with reference to the rotational axis Y.

The blades 4 extend radially with respect to the rotational axis Y. The wind turbine 1 comprises an electric generator 6 having a stator 11 and a rotor 12. The rotor 12 is rotatable with respect to the stator 11 about the rotational axis Y to generate electrical power. The electric generator 6 and the generation of electrical power through the present invention is not a specific object of the present invention and therefore not described in further detail.

The blade inspection device 100 is arranged at the tower 2 of the wind turbine. A transmitting leaky feeder 110 and a receiving leaky feeder 120 are respectively bend around the tower 2 in circumferential tower direction (in this example at the outside of the tower 2). In this manner, the leaky feeders cover each yaw position, so that an inspection is enabled in essentially each yaw position (360°). While the transmitting leaky feeder 110 transmits the electromagnetic signal of a transmitter unit 111, the receiving leaky feeder 120 receives a reflection (from the blade 4) of the electromagnetic signal and provides the received signal to a receiver unit 121.

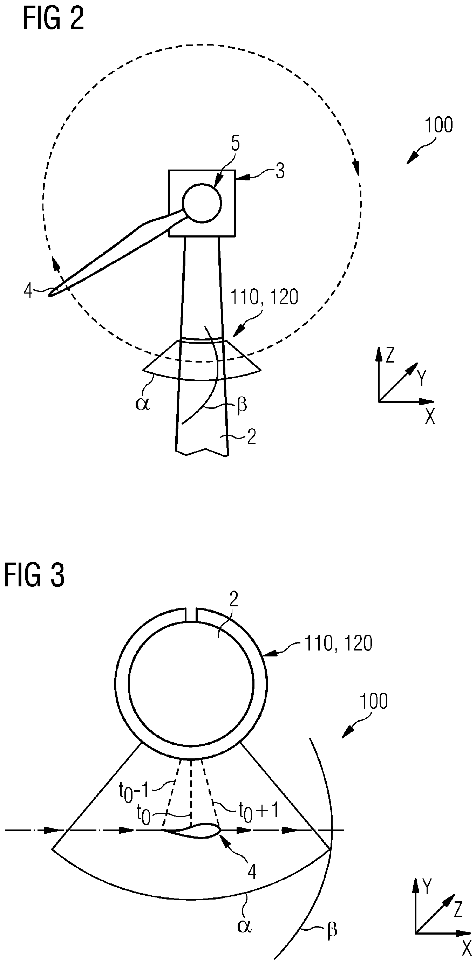

**Figure 2** shows a front view of a wind turbine blade inspection using ISAR in accordance with an exemplary embodiment of the present invention.

At least one transmitting leaky feeder 110 and at least one receiving leaky feeder 120 is installed horizontally at the wind turbine tower 2. The antenna beam angle of the transmitting and/or receiving leaky feeder 110, 120 can be described with $\alpha$ in azimuth (plane) and $\beta$ in elevation direction. It can be seen that a large antenna beam angle in $\alpha$ and $\beta$ direction can be achieved. To track incoming and outgoing blades 4, the leaky feeders 110, 120 are installed at the vertical height (z) of the blade tip. Since not the antenna (leaky feeders) is moving but instead the target (blade) is moving through the beam, an ISAR configuration is provided instead of SAR.

**Figure 3** shows a top view of wind turbine blade inspection using ISAR in accordance with an exemplary embodiment of the present invention. The trajectory of the blade 4 through the radar beam is illustrated. Directly in front of the tower 2, there is a position t0, a time increment before it is t0-1 and a time increment later it is t0+1. The processing device is sampling the trajectory of the blade 4 through the radar beam and every sample is taken into account for further signal processing (radar snapshots).

**Figure 4** shows a blade inspection device 100 comprising a transmitting leaky feeder path 115 and a receiving leaky feeder path 125 in accordance with an exemplary embodiment of the present invention.

The transmitting leaky feeder 110 (the antenna, comprising a plurality of slots 112) is coupled to a transmitter unit 111 at one side, and to a termination 133 at the other side. The connection to the transmitter unit 111 and the termination 133 (e.g. a resistor) is realized respectively by elongated conductors (not depicted here), e.g. a lead-in cable and a lead-out cable. This set-up can be termed transmitting leaky feeder path 115.

The receiving leaky feeder 120 (the antenna, comprising a plurality of slots 112) is coupled in this example to a first receiver unit 121 at one side, and to a second receiver unit 122 at the other side. The connection to the receiver units 121, 122 is realized respectively by elongated conductors (not depicted here), e.g. a lead-in cable and a lead-out cable. This set-up can be termed receiving leaky feeder path 125.

In other words, a radar transmitter 111 is connected to the transmitting leaky feeder 110. The leaky feeder 111 is terminated with its wave impedance (resistor) 133. The leaky feeder contains slots 112, which can be grouped into slot groups. At every slot 112, a portion of the electromagnetic energy (wave) can radiate into the air and is then reflected by a wind turbine blade 4. The reflected electromagnetic wave is then received by the receiving leaky feeder 120. The receiving leaky feeder 120 has preferably two receivers 121, 122, one at each end. By analysis of the runtime in the cable with the usage of both receivers 121, 122, the yawing position of the blade 4 along the receiving leaky feeder 120 could be determined.

**Figure 5** shows a leaky feeder 110 in accordance with an exemplary embodiment of the present invention. In this example, the leaky feeder 110 is configured as a leaky coaxial cable. The center of the leaky feeder is a conductor 116, e.g. a copper cable/wire. The conductor 116 is embedded (encapsulated) in a dielectric material layer 117. Further, around the dielectric material layer 117, there is arranged a shielding layer (outer conductor) 118, e.g. a metal/copper layer. A plurality of slots (apertures) 112 is formed in said shielding layer 118. Thereby, it is enabled to transmit/receive electromagnetic signal along the length of the leaky feeder 110. Since the transmission/reception takes (essentially) only place at the slots, it is termed "leaking". Optionally, a protection layer (cable jacket), in particular a dielectric such as rubber material, more in particular with low optical coverage, can be arranged around the shielding layer 118. The slots 112 are located with predefined positions and distances between each other. The first slot is the outermost slot with respect to the input or output of the leaky feeder 110. For example, an elongated conductor (not shown in this Figure) can be connected to the leaky feeder 110 in closest proximity to the first slot.

**Figure 6** shows a receiving leaky feeder path 125 coupled to a processing device 140 in accordance with an exemplary embodiment of the present invention. As described for Figure 4 above, the receiving leaky feeder 120 is connected to two receivers 121, 122. Each receiver 121, 122 is further coupled, via a respective analog-to-digital converter (ADC) 123, 124, to a signal processing unit 161, 162. Each processing unit 161, 162 comprises in this example a phase correction unit 171, 172, a coherence addition unit 173, 174, and a harmonization unit 175, 176. The processed signals 163, 164 are respectively provided to the processing device 140 to evaluate the measurement and thereby inspect the blade. A respective feedback path 143, 144 (for control) is implemented between the processing device 140 and the phase correction units 171, 172.

In this example, the processing device 140 comprises a central processor (CPU) and a storage. As additional inputs can serve data 142 from a sensor, e.g. an incremental sensor, arranged at the hub or the blade of the wind turbine. Further, calibration data 141 can be provided to the processing device 140.

The receiver 121, 122 itself can contain a low noise amplifier and a mixer to demodulate the received signal (FMCW radar may be used). After the mixer, the so called IF signal is then digitalized with an ADC 123, 124. Afterwards, a phase correction 171, 172 is processed with the information of phase offset (calibration, position of blade on its trajectory). This step is multiple times re-done (sampled) and every single "snapshot" is stored. In a preferred example, all sampled snapshots are coherent, added and normalized.

Based on this processing, the radar image is generated out of multiple snapshots/samples at time t0-1, t0, t0+1 and more. The signal processing could be partly done at the receiver 121, 122 and be controlled by a central controller or it could be centralized in a central controller. The central controller 140 can contain a CPU/GPU/FPGA and storage (memory). The central controller allows to store the data for later processing and also for comparing it over time with previously made ISAR images. The signal processing itself could be based on FFT/DFT and "matched filters" to determine/calculate the radar image out of the raw data.

It should be noted that the term "comprising" does not exclude other elements or steps, and the use of the item "a" does not exclude multiplicity. Elements described in conjunction with various embodiments can also be combined. It should also be noted that reference signs in the claims should not be interpreted as limiting the scope of the claims.

Independent of the grammatical term usage, individuals with male, female or other gender identities are included within the term.

**Claims**

1. A wind turbine (1) comprising:

a tower (2);
a nacelle (3), coupled to the tower (1);
a wind rotor (5), which is arranged at the nacelle (3), and which comprises at least one blade (4); and
a blade inspection device (100), comprising:

a transmitting leaky feeder (110), coupled to a transmitter (111), and configured to transmit an electromagnetic signal;
a receiving leaky feeder (120), coupled to at least one receiver (121, 122), and configured to receive a reflection of the electromagnetic signal; and
a processing device (140), configured to inspect the blade (4) based on the received electromagnetic signal;

wherein the blade inspection device (100) is configured as an inverse synthetic aperture radar, ISAR.

2. The wind turbine (1) according to claim 1,

wherein the transmitting leaky feeder (110) is configured to provide an antenna beam defined by an azimuth ($\alpha$) and an elevation ($\beta$); and/or
wherein the receiving leaky feeder (120) is configured to receive said antenna beam.

3. The wind turbine (1) according to any one of the preceding claims,
wherein the receiving leaky feeder (120) is coupled at the one end to a first receiver (121) and at the other end to a second receiver (122).

4. The wind turbine (1) according to any one of the preceding claims,
wherein the transmitting leaky feeder (110) and/or the receiving leaky feeder (120) is at least partially located in the tower circumferential direction, in particular inside or outside of the tower (2).

5. The wind turbine (1) according to any one of the preceding claims,
wherein the transmitting leaky feeder (110) and/or the receiving leaky feeder (120) is arranged at the same vertical height (z) as a part of the blade (4), in particular the tip of the blade (4).

6. The wind turbine (1) according to any one of the preceding claims, further configured to
determine a blade-related parameter, in particular moving speed and/or location, more in particular based on measurement of a sensor device and/or a phase-locked loop device.

7. The wind turbine (1) according to any one of the preceding claims, further configured to
determine a yaw-related parameter, in particular a position of the nacelle (3), more in particular based on a yaw inspection device.

8. The wind turbine (1) according to any one of the preceding claims, further configured to
perform a calibration operation with respect to the transmitting leaky feeder (110) and/or the receiving leaky feeder (120), in particular with respect to an elongated conductor associated with the transmitting leaky feeder (110) and/or the receiving leaky feeder (120).

9. The calibration device (100) according to the preceding claim, wherein the calibration operation comprises:
derive a length information with respect to the elongated conductor (120).

10. The wind turbine (1) according to claim 8 or 9,
wherein the calibration operation comprises at least one of frequency domain reflectometry, time domain reflectometry, beam steering.

11. The wind turbine (1) according to any one of the preceding claims, further configured to
determine a phase angle information and/or amplitude information with respect to the transmitting leaky feeder (110) and/or the receiving leaky feeder (120), in particular based on the calibration operation.

12. The wind turbine (1) according to any one of the preceding claims, further configured to
perform a phase correction and/or amplitude correction with respect to the transmitting leaky feeder (110) and/or the receiving leaky feeder (120) based on the calibration operation.

**13.** The calibration device (100) according to claim 11 or 12,
further configured to
adapt the phase shift of two or more leaky feeder (110) transmitted electromagnetic signals, based on the calibration operation, to steer an electromagnetic signal beam.

**14.** A method of inspecting a blade (4) of a wind turbine (1), the method comprising:

transmitting an electromagnetic signal by a transmitting leaky feeder (110);
receiving a reflection of the electromagnetic signal by a receiving leaky feeder (120); and
inspecting the blade (4) based on the received electromagnetic signal;

wherein the transmitting leaky feeder (110) and the receiving leaky feeder (120) function as an inverse synthetic aperture radar, ISAR.

**15.** Using a transmitting leaky feeder (110) and a receiving leaky feeder (120) for a wind turbine inspection by inverse synthetic aperture radar, ISAR.

FIG 1

# FIG 2

# FIG 3

**FIG 4**

**FIG 5**

**FIG 6**

Europäisches
Patentamt

European
Patent Office

Office européen
des brevets

# EUROPEAN SEARCH REPORT

Application Number

EP 23 16 1382

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/178785 A1 (NAGEL EIRIK [DE] ET AL) 9 June 2022 (2022-06-09) * paragraphs [0002], [0050], [0068] * * figures 1-4 * | 1,4,5,7, 14,15 | INV. F03D17/00 |
| X | US 2022/178350 A1 (NAGEL EIRIK [DE] ET AL) 9 June 2022 (2022-06-09) * paragraphs [0013], [0021], [0050] * * figures 1,4 * | 15 | |
| A | EP 2 596 582 A1 (KAELUS PTY LTD [AU]) 29 May 2013 (2013-05-29) * paragraphs [0001], [0022], [0044], [0064] – [0068] * | 8-13 | |
| A | KUMAR VIRENDRA ET AL: "Design Investigation of Leaky Coaxial Cable as Coupler for Active Phased Array Calibration", 2019 IEEE INDIAN CONFERENCE ON ANTENNAS AND PROPOGATION (INCAP), IEEE, 19 December 2019 (2019-12-19), pages 1-5, XP033789701, DOI: 10.1109/INCAP47789.2019.9134675 [retrieved on 2020-07-06] * the whole document * | 8-13 | TECHNICAL FIELDS SEARCHED (IPC) F03D |

The present search report has been drawn up for all claims

| Place of search | Date of completion of the search | Examiner |
|---|---|---|
| The Hague | 11 August 2023 | Pasquet, Pierre |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                                                 

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 16 1382

This annex lists the patent family members relating to the patent documents cited in the above-mentioned European search report.
The members are as contained in the European Patent Office EDP file on
The European Patent Office is in no way liable for these particulars which are merely given for the purpose of information.

11-08-2023

| Patent document cited in search report | | Publication date | Patent family member(s) | | Publication date |
|---|---|---|---|---|---|
| US 2022178785 | A1 | 09-06-2022 | CN | 113631905 A | 09-11-2021 |
| | | | EP | 3719475 A1 | 07-10-2020 |
| | | | EP | 3924709 A1 | 22-12-2021 |
| | | | US | 2022178785 A1 | 09-06-2022 |
| | | | WO | 2020200755 A1 | 08-10-2020 |
| US 2022178350 | A1 | 09-06-2022 | CN | 113631952 A | 09-11-2021 |
| | | | EP | 3719536 A1 | 07-10-2020 |
| | | | EP | 3935410 A1 | 12-01-2022 |
| | | | US | 2022178350 A1 | 09-06-2022 |
| | | | WO | 2020200696 A1 | 08-10-2020 |
| EP 2596582 | A1 | 29-05-2013 | AU | 2011282473 A1 | 07-03-2013 |
| | | | BR | 112013001525 A2 | 10-05-2016 |
| | | | CN | 103119845 A | 22-05-2013 |
| | | | DK | 2596582 T3 | 31-07-2017 |
| | | | EP | 2596582 A1 | 29-05-2013 |
| | | | US | 2013182753 A1 | 18-07-2013 |
| | | | WO | 2012009757 A1 | 26-01-2012 |

EPO FORM P0459

For more details about this annex : see Official Journal of the European Patent Office, No. 12/82